# EUROPEAN PATENT APPLICATION

(11) **EP 4 586 175 A1**
(43) Date of publication of application: **16.07.2025**
(21) Application number: 24020017.0
(22) Date of filing: 10.01.2024
(51) Int. Cl.: G06Q 30/0601

(54) **SYSTEM FOR SELECTION OF DILUENTS**

(71) Applicant: Dragon Poland Sp. z o.o., 32-050 Skawina (PL)
(72) Inventor: CZEKAJ, Michal, 30-131 Kraków (PL); TURSKA, Dorota, 30-109 Kraków (PL); MOURZESZ, Anna, 30-430 Kraków (PL); LIZIS, Pawel, 32-600 Oswiecim (PL); DWORAK, Mateusz, 30-348 Kraków (PL)
(74) Representative: Radlowski, Jakub

(57) **Abstract**

A diluent selection system comprising A. a central unit: a computer with memory and connection to the Internet equipped with an API for receiving and processing queries and a CMS database content management application, where one or more databases containing information on products and their applications are stored in the computer's memory, and B. external units which are computers with displays, equipped with a camera or other type of reader communicating remotely with the central unit. Database (6, 7) in computer memory (2) of the central unit (1) contains a list of diluents with information on their uses and a list of products suitable for dilution with the selected diluents. The products are relationally linked to the diluents. The external unit (8) scans a product tag (e.g. barcode, QR code, RFID tag) and communicates remotely with the API (4) (preferably based on the Larawel 9.x framework. PHP + My SQL) of the computer (2) of the central unit (1), and based on a query for a product, diluent or application, the central unit (1) provides feedback on the diluent matching the product or diluent applications or other diluent information.

## Description

The present invention relates to a computer-aided system for selecting diluents or solvents (hereinafter collectively referred to as diluents), using an implemented active database structure. Hence, the invention relates to the field of information technology connected with the selection of chemicals for commercial purposes.

Numerous solutions are known in prior art for assisting or facilitating the shopping process by enabling customers of big-box stores, wholesalers or other retail outlets to select the right product for their needs, compare prices or direct the customer to the right place where the product they are looking for is located. This type of solution uses elements of computer infrastructure, databases and software to allow the customer to remotely access the records stored in the database in order to select the correct product.

In Korean Patent No. KR101581802(B1) *"Application system for goods augmented reality"* described are communicating via a network a receiving device and a transmitting device of a main server extracting or retrieving content from a database. The server is equipped with an object recognition system and the application execution window is the screen unit of an electronic communication device. The system works on the principle of augmented reality, in which the object recognition system is based on either recognising an image from the screen or recognising a sign or text displayed on a product that can be read by the lens. The device is equipped with a menu and a controller to request data or perform a selected function, with the controller configured to work with the unit on which the content transfer verification application is installed. The document indicates identifiable products such as printed clothing, fabrics with printed images, marks, texts, advertising fabrics, paper, key chains, hats, industrial products from bags, catalogues, magazines, flyers, books, curtains, carpets, wallpaper, calendars, sheets and duvets, mats, indoor items, caps or lids, containers, teaching aids, toys, wrapping papers, tags and others. Images or product tags placed on a label or product identified by an image, mark or text are referred to as a "target", and a navigation button and the stop button appear in the execution window of the electronic communication device. This augmented reality-based system is equipped with a content utilisation function and is characterised by the fact that it is generated when the navigation target is activated and can generate a variety of content including sound, images and other product-related content.

Another Korean Patent No. KR101820504(B1) *"A system for presenting service of goods information comparison an apparatus thereof a terminal thereof and a method thereof"* presents a system for providing service of comparing goods information using image recognition and a device and terminal thereof, and also a method for comparing information. On the basis of a closed curve that defines the product outline (image) based on the product view, an image analysis is carried out. The device thus recognises the product with the help of the transmitting terminal and the above-mentioned closed curve, and provides information about the product once it has been identified. The terminal compares information about a specific product with the same or similar products. On the basis of the data received, the user can analyse products using various criteria and then select the product that has specific characteristics (e.g. using a touch panel).

U.S. Patent Application No. US2005203860(A1) *"Product selection expert system"* presents a product selection system containing: a processor; memory functionally linked to the processor, memory containing a program adapted to perform operations by the processor or a processor-memory module. The solution is adapted to present information by means of a user interface for product selection. The system includes codes placed on a computer-readable storage medium, configured and adapted to create and modify via a graphical user interface a graphically displayed tree structure representing multiple uses of the product, and to associate and modify via a graphical user interface one or more conditions of use of the product. The uses are shown in a tree structure. The interface allows the user to associate and modify one or more indications of product suitability for specific applications and to create and modify a list of products in association with the nodes of the tree structure. Information is also presented in this way, which may include conditions of use of the products and assessments of their suitability for the chosen purposes. The system allows the selection in the graphical user interface window of one or more operating conditions corresponding to the nodes of the selected tree structure path. The system also allows the user to enter product suitability indicators for the intended use. The system allows user-defined conditions of use to be compared with specific products, whereby products which do not have the required attributes will be filtered out of the list displayed. Various variants of this solution are possible, e.g. by prioritising product selection criteria or by additionally displaying hyperlinks to safety data sheets or other documents provided by the manufacturer.

In another patent application No. CA2695787(A1) *"Retail product and category finding self-service touch screen kiosk application"* presented is a system using a self-service station (kiosk) located in a retail outlet. The station is used to operate the product category search application and communicate with the user via a graphical interface. The station interactively communicates with a database containing tables, images and other data to visually present a summary of the search results, including the location of the specific product/product category in the store with an indication of, for example, the aisle, rack or shelf where the required product is located. The panel can display an access map and pictures of shelves. The product/category location information can either be sent by SMS to the user's mobile phone or printed out.

A method and apparatus for providing commodity object information is also presented in European Patent Application No. EP4156066(A1) *"Method and apparatus for providing commodity object information and electronic device".* In this case, the method is to provide interactive content in the process of playing live video content associated with the product object and the material used to describe the attributes of the object. Interactive content is subject to change in response to user input so that multiple product features can be presented. The aim is to provide consumers with information in a comprehensive and intuitive way to help them make purchasing decisions. The presentation of content relating to product features takes place using an active user interface.

Korean Patent Application No. KR20110012227(A) *"Method for providing product information"* presents a method for providing product information, which is designed to search for/deliver a product with the characteristics that a buyer expects, increasing search efficiency. This is done by entering the name of the product to be compared in the product name entry window in the operating panel of the system. The search window displays predefined search criteria expressing specific product characteristics. From these, the user selects the criteria of interest, after which the product corresponding to the search conditions selected by the buyer is found. The result of a search meeting the specified conditions is displayed in the result display window.

Descriptions of similar methods and systems known from prior art generally present their architecture and the purposes such solutions are intended to serve.

Mention is made of products, product features or their location, so the very concept of interactive support for purchasing processes, using remotely accessible databases, computer infrastructure and connections via the Internet, is known.

In the marketplace reality, faced with the availability of a very large number of chemical preparations for various applications, containing different substances and compounds, customers find it difficult to select diluents for the desired purpose (e.g. cleaning tools, removing residues of certain substances, diluting substances, etc.) or to match a diluent with another preparation (e.g. various types of paints, varnishes, adhesives, foams, sealants, lubricants, stains, etc.). Descriptions of applications can be found on labels, but such information is usually very general or only representative, not least because of the limited space available for printing on the label. In practice, the user often opts for multipurpose diluents, while there is a dedicated product for the chosen application, better suited to dissolving or removing a particular substance. Moreover, the use of diluent can damage surfaces or coatings when affecting one substance. Such information is not provided on the labels. Another problem is when the user knows what product they have used, but no longer has the label from the packaging and is unable to determine what preparation they should apply to dissolve the product used. As a result, customers often look for such additional information on the Internet or ask for advice from assistants in stores, but such sources of information are usually uncertain and difficult to verify.

A computer-aided selection system for chemical preparations, in particular diluents, comprises a **central unit** being a computer or set of computers with memory; at least one relational database; an API interface; a CMS content management computer application; a remote connection module providing connection of the central unit to a computer network; and **external units** being computers remotely connected to the central unit (e.g. mobile phones, readers or terminals). The external units are equipped with a lens, an installed computer application that communicates with the central unit's API, and a display that allows the user interface to generate queries to the central unit and display content retrieved from the central unit.

The central unit stores in its memory structured data forming one or more relational databases comprising information on diluents. This database includes information on the names of the diluents, their identifiers (in the form of, for example, EAN codes, barcodes, QR codes, RFID tags or any other type of digitally writable and readable tag). The database also contains information about the chemical composition of the diluents and their applications. The database also preferably contains images of packaging or labels of the diluents, allowing them to be easily identified in the store. The database may also include additional information contained in the safety data sheets of the diluents, e.g. on the conditions or method of use, risks to life or health, treatment in the event of contact with skin, eyes or ingestion, and other relevant data.

Information on chemical products offered on the market by other companies (base products) is stored in the same or an additional database of the central unit. This database includes information on the names of the base products available on the market, their identifiers (in the form of, for example, EAN codes, barcodes, QR codes, RFID tags or any other type of digitally writable and readable tag), chemical composition and also preferably photographs of base products or their labels. In the embodiments of the system according to the invention given below, the reading of product identifiers in the form of barcode scanning is described, but it will be clear to a person skilled in the art that such an identifier could just as well be any other tag enabling the unambiguous identification of the product (or diluent), including any of the above example identifiers.

The central unit database contains information on the association of base products with their corresponding diluents. In addition, the database may include information on the surfaces of objects, which may be made of, inter alia, metals, plastics, stone, glass, wood or other materials, and may also be covered with coatings (e.g. paints, varnishes, films or other plastics, impregnants, bituminous compounds, stains, etc.).

The database (or databases) located in the memory of the central unit server has a rest-API interface based on the PHP framework version Laravel 9x that supports queries from external units.

A content management computer application (CMS) is also installed on the central unit server to list, add, delete and edit diluent-specific records, as well as add, delete or change base products records. The CMS application makes it possible to manage graphic files showing labels or packaging of base products and diluents.

The system includes a computer application installed on external units under the Android or IOS operating system allowing the end user to identify the products. Identification takes place by scanning the product tag (e.g. barcode, QR code) or by manual entry of a code (e.g. EAN) or by remote reading of the product tag, e.g. using RFID or NFC communication. The application enables communication via the Internet with the API and thus sending of requests and receive responses.

An essential element of the application installed on the external unit is the user interface, allowing queries to be entered manually (as an alternative to scanning product tags), as well as selecting products or applications from a displayed list and presenting the responses received from the central unit. Both the generation of queries and the display of responses can be textual (e.g. description of applications) or graphical by displaying product names, labels or packaging (e.g. bottle, can, box - just like a customer sees it on the store shelf).

The presentation of the base products for which a suitable diluent is sought can take place after the selection of the substance category by the user. In this case, the system displays the base products from a given category either as a list or as a so-called "carousel" allowing the user to move horizontally through the labels or packaging of the base substances, from which the user selects the product of interest. This is especially important if the user does not remember the exact name of the product they have used, but is able to identify the correct product from the appearance of the product packaging. Subsequently, the recommended diluents are displayed for the base product thus selected. In many cases, it may be possible to match more than one diluent to a particular base product, in which case the user is provided with information on several matching diluents, together with a description of the characteristics of each matching diluent, so that the most favourable choice can be made. A diluent that matches the chosen base product may not be suitable, for example, for cleaning a particular type of coating due to the possibility of damage to the coating. Along with the diluent recommendation, the user is provided with this kind of additional information.

On an analogous basis, the interface displays the diluents recommended for the **application** specified by the user. The system indicates one or more of the available diluents corresponding to the selected application, and additionally informs about other characteristics or contraindications in the use of the recommended diluents. While in the case of matching a diluent to a product the query is always unambiguous and takes place by indicating the specific item, in the case of applications there are usually many possibilities that cannot be predefined. Therefore, in the case of applications, the user first selects an **application category** (e.g. tool cleaning, paint removal, substance thinning, etc.) and then selects one of the indicated applications from the list in the category (in the form of a subcategory, e.g. thinning epoxy paints). Alternatively, it is possible to enter a query manually, which the API classifies on the basis of keywords suggesting a list of matching applications categorised in the database. The user selects from among the suggestions the item that best suits their needs. On this basis, a selection is made of a diluent or several diluents suitable for the chosen task.

The system also makes it possible to find out exactly which base products or applications a specific diluent matches, i.e. in this case, the user enters a query about a specific target product they already have or want to purchase, and the system provides information about what this diluent can be used for or about its other characteristics. The diluent is selected by manually entering the name or EAN code or scanning the tag on the diluent (e.g. barcode, QR code), which displays the label or packaging of the diluent in the user interface on the external unit. At this stage, the user verifies whether the displayed packaging/label represents the diluent of interest. Once the user confirms the diluent selection, the central unit's API searches for matching records and returns a response, which the external unit displays on the screen. The response includes a list of applications or a list of base products for which the diluent is recommended, or additional characteristics of the diluent (e.g. contraindications, information from the safety data sheet, treatment in case of skin contact, ingestion, etc.). In the case of a larger number of applications or a larger number of matching base products, the user is first presented with category information and then, when a specific category is selected, a list of subcategories is displayed so that the user can precisely find the information they need. Preferably, information on categories or subcategories (e.g. matching base products) can be displayed in the form of a "carousel" of applications or base products found in that category. After selecting a base product or an application or additional information about the diluent from the list, the user interface displays confirmation of the correct diluent selection and possibly additional information. Such information may include, for example, method of use, the proportions or quantities in which the substance should be used in relation to a particular surface, weight or volume; coatings that may be damaged if the solvent is used, etc. This is particularly important in the case of diluents, the effects of which, in addition to the desired effects, may interact with the coating material covering the surfaces of the obj ects.

With the presented system, a user can select a suitable type of diluent for the identified base product, using the linkage relationship contained in the central unit database. On this same principle - by formulating or selecting a specific item from a ready-made list of applications - the user can select the diluent for the application they wish to use (e.g. removal of soiling from a particular substance such as different types of adhesives, paints, plasters, foams, sealants, filling compounds; thinning of substances, etc.). The user can also check the application of their chosen diluent. In some cases, it may be that the suggested diluent is suitable for the chosen application or base product, but the user will also be advised on which surfaces the diluent cannot be used. For example, cleaning stainless steel tools from residues of flexible adhesive for stone can be performed very well with a particular type of diluent, the use of which on the surface of a PVC window frame or impregnated wooden balustrade will lead to surface damage. The user can then choose another of the recommended diluents.

The diluents database is continuously updated in the central unit as new types of products appear on the market. In each such case, based on the chemical composition of the base product, one or more target products, in particular diluents, are selected that will be able to be used to dissolve, dilute or remove the specified base product.

The system is also subject to ongoing updates based on users' queries. Incorrect queries - or queries for which the API is unable to find a matching record in the databases - are stored in the central unit memory. Based on such queries, the system administrator carries out analyses on an ongoing basis and, where appropriate, the database is updated with relevant entries for base products, applications or diluents matching new base products or applications. In this way, the operation of the system is subject to continuous improvement.

The subject of the invention shown in the embodiment comprises a central unit (1) constituting a computer (2) with memory, wire-connected to a file server (3) and having a fibre optic connection to the Internet. The computer (2) supports the API which is based on the Larawel Framework version 9.x. (PHP + MySQL) (4) communicated with a CMS application (5) for content management, also installed on a computer (2). The diluent database (6) stored on the file server (3) contains data on available diluents, their names, barcodes identifying each diluent, graphic files showing diluent packaging (including labels); the chemical composition of each diluent; yield expressed in units of mass, volume or area, and a list of applications. The diluent database (6) additionally contains information for of each diluent on all its application; method of use, including recommendations on which surfaces and coatings the diluent should not be used and on which it is permissible; how to deal with contact with the skin, eyes or if swallowed; as well as any contraindications (e.g. flammable substance, staining substance, toxic fumes, etc.). The second database of base products (7) is stored on the file server (3) and contains data on commercially available chemical products including adhesives, impregnants, paints, varnishes, stains, plasters, compounds, sealants, liquid films, foams, bituminous products, lubricants, oils, preservatives, waxes, grouts, polishes, pastes, etc., together with the name of each product; its identifying barcode; graphic files showing the packaging of base products (including labels); chemical composition; and volume or weight. In the case of base products of the same type with different volumes or weights, the base products database (7) includes data on all types of packaging (weight or volume) in which the base product is available. The CMS application (5) supports the relationships between the diluents database (6) and the base products database (7) by creating linkage keys between records in both, so that each base product is associated with at least one diluent whose chemical composition makes it suitable for diluting the paired base product. Where more than one diluent can be matched to a specific base product, additional linkage keys are created between one base product and several matching diluents. In an analogous way, each diluent can be associated with a number of different base products whose composition allows them to be diluted with this type of diluent. The CMS application (5) additionally supports weight, volume or area relationships, so that, depending on the weight or volume of the base product, it is possible to indicate which amount of matching diluent will be required for a specific application (e.g. removing parquet varnish off a specific floor area). In the presented embodiment, external units (8), which are smartphones with a touchscreen display (9), remote communication modules (10) (WiFi and mobile network cards) and a camera (1), running under Android or IOS are communicated with the central unit (1) via the Internet. A dedicated computer program (12) is installed on the external units (8) to communicate with the API (4) via a remote communication module (10).

In the described embodiment, the first user of the external unit (8) used a two-coat varnish stain of brand X to waterproof 25m² of terrace, for which 15 litres of varnish stain were used, with the colour of the varnish stain used not being in accordance with the client's instructions and the existing coating having to be removed and a new coating of a different colour applied. The user is in the store in the paint department and sees the packaging of varnish stain X and from the user interface menu runs the program "scan product code" (12) on his phone, which is the external unit (8), after which the barcode camera is activated and the user scans the barcode of varnish stain X. The screen displays a package of varnish stain X that corresponds to the goods whose code was scanned. The user selects the "select diluent" option, after which the external unit (8) communicates with the API interface (4), which generates a query to the database of base products (7). Based on this query, the CMS application (5) reads the relationship keys for varnish stain X by reading the associated 2 different diluents (A) and (B) and returns the response via API (4) to the external unit (8). On the screen, the user sees the proposed diluents (A) and (B) in the form of graphics of the bottles and labels in which they are offered; the user selects diluent (A). After making the choice, the user receives additional information about this product, which shows, among other things, that the diluent (A) is not suitable for use on PVC or wooden surfaces. The user therefore chooses the diluent (B) that suits their needs. In addition, after selecting the diluent (B), the user is informed that 1 litre of this product is sufficient to remove the coating from 10m² of area covered with one coat of varnish stain X. In this way, the user also learns that they should purchase a 5-litre pack of diluent (B) because the surface to be washed off is covered with two coats of varnish stain.

Another user of another external unit (8) wants to use a diluent that they have already purchased, but whose label is stained with paint, so that the user is not sure whether this diluent will be suitable for removing the PUR foam residue from the sealing works. The user starts the computer programme (12) and selects the "check application" option. Subsequently further options are displayed: 1/ "scan code"; 2/ "enter diluent name" and 3/ "applications". As the product barcode is not fully legible, the user selects the "enter diluent name" option and manually enters the name Y, confirming with the "select" button. On the phone screen, the user interface displays the product packaging under this name. The user sees that is the same product they have so they once again validate the selection. The external unit (8) communicates remotely with the API (4) by sending a query for the application of diluent Y. The API (4) generates a query to the diluents database (6) from which it extracts the data of interest to the user and sends it back to the external unit (8). The user is shown full information about the diluent Y, including its possible applications, contraindications and information that it should not be used in rooms with closed windows, as the vapours in a certain concentration are toxic. The user does not find in the list of applications for diluent Y the application for removing PUR foam residues, so they select the option "check application" from the main menu of the computer program (12) and then 3/ "applications". The user interface displays the application categories from which the user selects "dirt removal". The user then selects "PUR foam" from a drop-down list of different types of dirt. Based on this, the external unit (8) generates and sends a query to the API (4) which retrieves the information stored in the diluents database (6) according to the query covering the applications. In the feedback, the user receives a list of three diluents (A), (B) and (C), which are displayed as packaging graphics in a scrolling menu in the form of a so-called "carousel". By clicking on the individual graphics, the user interface displays full information on each diluent suitable for PUR foam removal.

A third user wants information on what diluent will be suitable for diluting substance Z, which he intends to purchase in the store. To do this, in the user interface of the computer program (12) the user selects the option "scan code" and, when the camera starts, they scan the barcode of substance Z. However, there is no record in the base product database (6) corresponding to the scanned barcode, so the response that the API interface returns (4) reads "no product in database". At the same time, the CMS application (5) records an erroneous query by a third user and generates a message for the central unit administrator (1). On the basis of this erroneous query, the administrator is informed that the base products database (6) needs to be updated to include a product that has not yet been stored there. Based on the content of the label, safety data sheet and information from the manufacturer of substance Z, records are generated for all packaging volumes of this substance in which it is available on the market, as well as linkage keys pairing substance Z with matching diluents, together with the required quantities of diluent to be used to dilute to a given density, wash off or remove soiling with substance Z.

By using the described system, users are able to quickly and easily select a diluent for a specific product or application or check the use of a specific diluent. The information thus obtained is complete and avoids errors in the selection of diluents and, moreover, makes it possible to determine the required amount of diluent necessary for a specific purpose.

## Claims

1. A diluent selection system consisting of a central unit comprising a computer with memory and connection to the Internet equipped with an API interface for receiving and processing queries and a CMS database content management application, wherein at least one database containing information about the products and their applications is stored in the memory of the computer, and wherein the system further comprises external units which are computers with displays, equipped with a camera or other type of reader communicating remotely with the central unit, **characterised in that** the database (6, 7) in the memory of the computer (2) of the central unit (1) contains a list of diluents with information on the applications of the individual diluents and the database (6, 7) contains a list of products that can be diluted with the use of the individual diluents, and the products are relationally linked to the corresponding diluents so that, based on a query for the product or the diluent or the application, the external unit (8) communicating remotely with the API (4) of the computer (2) of the central unit (1) receives information on the diluent matching the product, or the diluent characteristics or applications, or the diluent matching the application.

2. System according to claim 1, **characterised in that** in the memory of the computer (2) of the central unit (3) a database of diluents (6) and a database of base products (7) are stored separately, remaining in mutual relation using the record linkage keys of each database, and the database of diluents (6) contains information about the following features of each diluent: name, product identifier, graphics or photograph of package or label, list of applications, method of use, contraindications and risks to life or health, treatment in the case of human body contact with the diluent substance, volumes or weights of diluent necessary for the specific purpose, and the base product database (7) contains information on the following characteristics of each base product: name, product identifier, graphics or photograph of package or label, chemical composition, volumes or weights of packages available on the market.

3. System according to claim 1 or 2, **characterised in that** the product tag is a barcode or QR code or EAN code, RFID tag or NFC tag.

4. The system according to one of the previous claims **characterised in that** the interface API (4) is based on the Larawel 9.x. Framework (PHP + My SQL).

5. System according to one of the preceding claims, **characterised in that** the diluent database (6) contains data on contraindications to the use of particular diluents on particular surfaces or for particular coatings or substances, and data on the yield of the diluent for particular applications or products
